(19) Europäisches Patentamt
European Patent Office
Office européen des brevets

(11) **EP 4 703 814 A1**

(12) **EUROPÄISCHE PATENTANMELDUNG**

(43) Veröffentlichungstag:
04.03.2026  Patentblatt 2026/10

(21) Anmeldenummer: 24197958.2

(22) Anmeldetag: **02.09.2024**

(51) Internationale Patentklassifikation (IPC):
**G05B 17/02** *(2006.01)*

(52) Gemeinsame Patentklassifikation (CPC):
**G05B 17/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder: **Weigand, Jonas**
**40789 Monheim am Rhein (DE)**

(74) Vertreter: **Siemens Patent Attorneys**
**Postfach 22 16 34**
**80506 München (DE)**

(54) **VERFAHREN UND VORRICHTUNG ZUR VORHERSAGE VON ZEITREIHENDATEN MINDESTENS EINES SENSORS EINER VERFAHRENSTECHNISCHEN ANLAGE**

(57)    Die Erfindung betrifft ein computerimplementiertes Verfahren und entsprechende Vorrichtung zur Vorhersage von Zeitreihendaten mindestens eines Sensors (S) einer verfahrenstechnischen Anlage, mit den Schritten:

- Empfangen von diskreten Eingangsdaten (DD) des mindestens einen Sensors (S) und/oder eines Überwachungsgeräts (Ü) über eine Zeitspanne,
- Empfangen eines vorverarbeiteten, dynamischen Modells (M), welches zumindest teilweise datenbasiert ist und einen kontinuierlichen Prozess (P) charakterisiert,
- Berechnung eines Initialzustands des Modells (M),

- Festlegen mindestens eines Vorhersagezeitraums mit zugehörigen, diskreten Zeitschritten,
- Auswertung des kontinuierlichen Modells (M) für die festgelegten Vorhersagezeiträume mittels eines Differentialgleichungslösers (DES),
- Ausgabe von diskreten Erwartungswerten von Zeitreihendaten für die festgelegten Vorhersagezeiträume.

Das erfindungsgemäße Verfahren erlaubt eine Verbesserung eines Betriebs und/oder einer Planung einer verfahrenstechnischen Anlage mittels der vorhergesagten Zeitreihendaten.

FIG 1

EP 4 703 814 A1

**Beschreibung**

Die Erfindung betrifft ein Verfahren und eine entsprechende Vorrichtung zur Vorhersage von Zeitreihendaten mindestens eines Sensors einer verfahrenstechnischen Anlage. Des Weiteren betrifft die Erfindung ein entsprechendes Computerprogramm und Computerprogrammprodukt zur Vorhersage von Zeitreihendaten.

Verfahrenstechnische Anlagen sind komplexe Systeme, die zur Herstellung, Verarbeitung oder Behandlung von Stoffen und Materialien eingesetzt werden. Sie bestehen aus einer Vielzahl von Komponenten, darunter Feldgeräte, Rohrleitungen, Armaturen, Bussysteme und Steuerungssysteme. Diese Anlagen finden breite Anwendung in verschiedenen Industriezweigen, wie der Chemie, Petrochemie, Pharmazie, Lebensmittel- und Getränkeindustrie. Sie ermöglichen eine Vielzahl technischer Prozesse, darunter chemische Reaktionen, Stoffsynthesen, physikalische Umwandlungen, Trennverfahren, Destillation, Extraktion, Mischung und Filtration. Verfahrenstechnische Anlagen umfassen auch technische Anlagen zur Energieerzeugung, zur Wasserverteilung oder Abwasserbehandlung.

Die meisten Prozesse, welche in verfahrenstechnischen Anlagen ablaufen, sind kontinuierliche Prozesse, d.h. sie laufen ohne Unterbrechungen ab, im Gegensatz zu diskontinuierlichen Prozessen des Chargenprozesses. Erstere finden beispielsweise in Rohrreaktoren statt, letztere in mehr oder weniger abgeschlossenen Gefäßen, wie etwa in Rührkesseln oder Reaktoren. Kontinuierliche Prozesse werden bei der Verarbeitung großer Mengen mit wenigen Produktwechseln bevorzugt, da Prozessschritte wie Reinigen oder Wiederbefüllen von Reaktoren entfallen und damit der Gesamtprozess wirtschaftlicher wird. Diskontinuierliche Prozesse finden sich meistens in der Stückgut- und Fertigungsindustrie außerhalb der Verfahrenstechnik für technische Prozesse wie beispielsweise Montage, Verschweißung oder Verpackung.

In verfahrenstechnischen Anlagen ermöglichen Feldgeräte und verbundene Automatisierungskomponenten oder ein Leitsystem den Zugriff auf alle relevanten Prozesswerte wie Temperatur, Druck oder Durchfluss. Die Prozesswerte werden durch Sensoren oder Feldgeräte als physikalisches Signal erfasst. Ein Messumformer oder Transmitter wandelt dieses Signal in ein elektrisches Signal um. Abhängig von der Norm und den Systemanforderungen kann dieses Signal ein 4-20 mA Stromsignal oder ein 0-10 V Spannungssignal sein. Das analoge, elektrische Signal wird anschließend an eine Steuereinheit wie beispielsweise eine speicherprogrammierbare Steuerung (SPS) weitergeleitet und in dieser digitalisiert. Spätestens an dieser Stelle liegen diskrete, nicht kontinuierliche Messwerte oder Prozesswerte, also Datenpunkte zu bestimmten Zeitpunkten, vor. Automatisierungsgeräte, welche mindestens eine SPS umfassen und Teil eines Automatisierungssystems sind, sind so konfiguriert, dass sie die Prozesswerte in regelmäßigen Abständen (getaktet) oder als Reaktion auf bestimmte Ereignisse erfassen. Dies kann beispielsweise alle paar Sekunden oder Minuten erfolgen. Die Taktrate eines Automatisierungssystems variiert je nach Anforderungen und Einsatzbereich und liegt in der Regel zwischen Mikro- und Millisekunden.

Die erfassten Messwerte sind demnach diskrete Datenpunkte, die den Zustand des Prozesses zu einem bestimmten Zeitpunkt repräsentieren. Diese diskreten Datenpunkte werden dann typischerweise in einer zeitlichen Reihenfolge als Zeitreihendaten in einer digitalen Anwendung (Hardware- oder Software-Anwendung) aufgezeichnet und können zur Analyse, Überwachung und Steuerung des Prozesses verwendet werden. Eine Vorhersage von Zeitreihendaten, also von diskreten Datenpunkten, die den Zustand des Prozesses in der Zukunft repräsentieren, kann vorteilhaft zur Prozessoptimierung verwendet werden. Hierfür werden Modelle benötigt, welche die Realität des zugrundeliegenden Prozesses möglichst genau wiedergeben. Eine gute Modellierung hängt somit auch von den Eingangsdaten ab. Wenn bestimmte Informationen fehlen, kann das Modell ungenau sein. Fehlende Daten können zu ungenauen Vorhersagen führen. Modell und Daten müssen daher aufeinander abgestimmt sein.

Demzufolge besteht eine Diskrepanz zwischen der kontinuierlichen Natur verfahrenstechnischer Prozesse und der diskreten Arbeitsweise digitaler Anwendungen, was insbesondere bezogen auf die Modellierung der Prozesse eine besondere Herausforderung darstellt. Schließlich bildet die Prozessmodellierung die Grundlage für die Prozessoptimierung und damit für die Vorhersage von Zeitreihendaten. Um den Betrieb oder die Planung verfahrenstechnischer Anlagen, in welchen kontinuierliche Prozesse gefahren werden, zu verbessern oder zu optimieren, ist es demnach unumgänglich, die Diskrepanz zwischen zeitkontinuierlichen Modellen und diskreten Prozesswerten einer digitalen Anwendung auszugleichen.

Ein erster Lösungsansatz wäre, den verfahrenstechnische Prozess von Experten physikalisch modellieren zu lassen und das daraus resultierende Modell zu diskretisieren, um es in der digitalen Anwendung ausführen zu können. Dies ist in der Regel sehr aufwändig und rechenintensiv und fehlerbehaftet. Außerdem müssen bei der Modellierung eines zeitkontinuierlichen physikalischen Modells physikalische Modell-Parameter von physikalischen Gleichungen mühsam durch Vorwissen oder spez. Experimente ermittelt werden. Alternativ könnte ein zeitdiskretes Modell des verfahrenstechnischen Prozesses definiert und datenbasiert trainiert werden. Bei solchen datenbasierten, diskreten Modellen muss nur die Struktur der Modell-Parameter im diskreten Parameterraum festgelegt werden. Die Parameter werden ohne Information über den Prozess - in den meisten Fällen zufallsbasiert - initialisiert und das Modell wird anschließend auf Trainingsdaten, welche den Prozess beschreiben, trainiert. Eine Parametersuche im diskreten Modellierungsraum ist jedoch mit vielen Nachteilen verbunden und für den kontinuierlichen Prozess schlechter geeignet. Außerdem besteht bei einem diskreten Parameterraum das Problem, dass die Parameter mit sehr hoher numerischer Genauigkeit ermittelt werden müssen. Ferner können bei der Definition eines zeitdiskreten Modells wichtige Informationen verloren gehen.

Daher ergibt sich die Frage, wie eine effektive Brücke zwischen der kontinuierlichen Modellierung des Prozesses und der diskreten Natur der digitalen Anwendung (beispielsweise im Umfeld eines Automatisierungssystems) geschlagen werden kann, um eine genaue und effiziente Prozesssteuerung, -optimierung und -überwachung zu gewährleisten.

Es ist demnach eine Aufgabe der vorliegenden Erfindung, den Betrieb einer verfahrenstechnischen Anlage, in der ein Prozess abläuft, der durch ein kontinuierliches Modell abgebildet wird, und in der Prozesswerte (mittels eines Automatisierungssystems) diskret erfasst und verarbeitet werden, zu verbessern und zu optimieren.

Diese Aufgabe wird gelöst durch ein computerimplementiertes Verfahren zur Vorhersage von Zeitreihendaten mit den Merkmalen des Anspruchs 1. Außerdem wird die Aufgabe gelöst durch eine entsprechende Vorrichtung mit den Merkmalen des Anspruchs 7 und durch ein Computerprogrammprodukt gemäß Anspruch 9. Vorteilhafte Weiterbildungen ergeben sich aus den abhängigen Ansprüchen.

Die Erfindung basiert auf der Erkenntnis, ein datenbasiertes, zeitkontinuierliches Modell, welches einen kontinuierlichen Prozess charakterisiert, mit einem Differentialgleichungslöser zu kombinieren, um das Modell auf einer digitalen Plattform auswertbar zu machen. Erfindungsgemäß wird nun eine Parameterstruktur für ein datenbasiertes Modell im kontinuierlichen Raum definiert. Diese Parameterstruktur kann sehr allgemein definiert werden - beispielsweise als der kontinuierliche Parameterraum sämtlicher linearen und nichtlinearen Differentialgleichungen. Wie für zeitdiskrete datenbasierte Modelle werden die Werte der Parameter zufallsbasiert initialisiert. Dadurch entfällt der Aufwand einer manuellen, physikalischen Modellierung. Um das datenbasierte, kontinuierliche Modell nun auf einer diskreten Plattform ausführen zu können, wird ein Differentialgleichungslöser wie bei den physikalischen Modellen verwendet, mittels dem eine Umrechnung auf diskrete Zustände erfolgt.

Die Erfindung betrifft somit ein computerimplementiertes Verfahren zur Vorhersage von Zeitreihendaten mindestens eines Sensors einer verfahrenstechnischen Anlage, mit den Schritten:

- Empfangen von diskreten Eingangsdaten des mindestens einen Sensors und/oder eines Überwachungsgeräts über eine Zeitspanne,
- Empfangen eines vorverarbeiteten, dynamischen Modells, welches zumindest teilweise datenbasiert ist und einen kontinuierlichen Prozess charakterisiert,
- Berechnung eines Initialzustands des Modells,
- Festlegen mindestens eines Vorhersagezeitraums mit zugehörigen, diskreten Zeitschritten
- Auswertung des kontinuierlichen Modells für die festgelegten Vorhersagezeiträume mittels eines Differentialgleichungslösers,
- Ausgabe von diskreten Erwartungswerten von Zeitreihendaten für die festgelegten Vorhersagezeiträume,
- Einsatz der Zeitreihendaten in Echtzeit zur Verbesserung eines Betriebs oder einer Planung der verfahrenstechnischen Anlage.

Die Vorteile des erfindungsgemäßen Verfahrens sind vielfältig. Der größte Vorteil besteht darin, dass für digitale, diskrete Eingangsdaten, wie sie beispielsweise von einem Automatisierungssystem ausgegeben werden, für einen Vorhersagezeitraum Zeitreihendaten eines kontinuierlichen Prozesses genauer und zuverlässiger vorhergesagt werden können, was sowohl den Betrieb, als auch die Planung, einer verfahrenstechnischen Anlage signifikant verbessert. Erfindungsgemäß wird ein Differentialgleichungslöser als Brücke zwischen dem Gegenstand einer kontinuierlichen Modellierung und den diskreten Eingangsdaten des Modells, verwendet. Das Modell, welches einen kontinuierlichen Prozess charakterisiert, kann in dem deutlich besser geeigneten kontinuierlichen Raum definiert, trainiert und verwendet werden. Kontinuierliche Modelle lernen die Veränderungsraten, und nicht die absoluten Zustände eines Prozesses. In zufalls-initialisierten, kontinuierlichen Modellen wird im Rahmen des Modell-Trainings strukturell das Vorwissen integriert, dass Veränderungsraten in der Verfahrenstechnik begrenzt sind. Sofern aus den Trainingsdaten nicht explizit große Veränderungsraten hervorgehen, nimmt das Modell begrenzte Veränderungsraten an.

Diskrete Modelle kennen diesen Zusammenhang nicht. Zwischen zwei Zuständen können quasi unendlich große Sprünge auftreten. Erst aus den Trainingsdaten lernen diskrete Modelle, dass der zugrundeliegende Prozess nur begrenzte Veränderungsraten aufweist. Wenn nur wenige Trainingsdaten zur Verfügung stehen oder die spätere Verwendung stark unterschiedlich von den Trainingsdaten ist, bleiben sowohl kontinuierliche als auch diskrete Modelle bei ihrer Voreinstellung. Bei diskreten Modellen kann ein unvorhersehbares Verhalten auftreten, was Vorhersagen von Zeitreihendaten erschwert. Bei kontinuierlichen Modellen hingegen orientiert sich die Vorhersage stark an den vorangegangenen Zuständen. Die Vorhersage weicht nur geringfügig von dem vorangegangenen Zustand ab. Insbesondere bei begrenzten Trainingsdaten lässt sich dies nutzen. Ferner können daher zeitkontinuierliche Modelle, im Gegensatz zu zeitdiskreten Modellen, zu jedem beliebigen Zeitpunkt ausgewertet werden. Auf diese Weise können unregelmäßig aufgezeichnete Trainings- oder Inferenzdaten (Daten mit unregelmäßigen zeitlichen Abständen/unregelmäßiger Abtastrate) genauso wie lückenhaft aufgezeichnete Daten verarbeitet werden. Aufgrund der Berücksichtigung der kleinen Veränderungsraten bei der Auswertung des zeitkontinuierlichen Modells werden auch bei der Anomaliedetektion verbesserte Ergebnisse erzielt.

In einer besonders vorteilhaften Ausführungsvariante weist das dynamische Modell neben dem datenbasierten Modell ein physikalisches Modell und/oder ein stochastisches Modell auf. Dadurch kann bei der Anwendung des Differentialgleichungslösers eine Aufgabenteilung stattfinden, was zu einer verbesserten Rechenleistung führt. Bei dem datenbasierten Modell kann es sich um ein neuronales Netz handeln. Das neuronale Netz übernimmt die Aufgabe, den deterministischen Teil der Lösung zu modellieren. Das physikalische Modell übernimmt die Aufgabe, das Expertenwissen der jeweiligen Domäne zu modellieren, physikalische Sachverhalte einzubringen, die häufig den kontinuierlichen Prozess prägen. Das stochastische Modell berücksichtigt Wahrscheinlichkeiten und Statistiken und vervollständigt damit die Abbildung des kontinuierlichen Prozesses.

In einer weiteren vorteilhaften Ausführungsvariante entsprechen die diskreten Eingangsdaten pro Sensor Messwerten von Prozessvariablen oder mittels eines digitalen Zwillings simulierten Werten der Prozessvariablen. Unter dem Begriff "Prozessvariable" wird eine messbare Größe verstanden, die den Zustand oder die Eigenschaften eines laufenden hier kontinuierlichen Prozesses in der technischen Anlage beschreibt. Dabei kann es sich beispielsweise um Größen wie die Temperatur, den Druck, den Füllstand, den Durchfluss oder andere relevante Größen handeln. Prozessvariablen sind stets digital werden mittels Messumformern im Takt eines Automatisierungssystems erfasst und über eine Automatisierungskomponente dem Leitsystem zugeführt und vom Leitsystem weiterverarbeitet. Je nach Ausprägung eines digitalen Zwillings, der digitalen Abbildung einer technischen Anlage, können Prozessvariablen auch digital erzeugt werden. Für die Vorhersage der Zeitreihendaten spielt es vorteilhaft keine Rolle, ob die Prozessvariablen real oder virtuell erzeugt wurden.

In Echtzeit aufgenommene Datensätze von Messwerten der Prozessvariablen erlauben vorteilhaft eine Zustandsüberwachung von Komponenten der technischen Anlage im laufenden Betrieb der technischen Anlage. Werden simulierte oder virtuell erzeugte Sensor-Datensätze verwendet ist eine Anwendung des erfindungsgemäßen Verfahrens z.B. vor Inbetriebnahme einer technischen Anlage möglich. Insbesondere könnte ein digitaler Zwilling der technischen Anlage die Datensätze für die Vorhersage der Zeitreihendaten liefern, sodass das Einlernen des Modells mittels dieser simulierten Datensätze außerhalb des Betriebs der technischen Anlage erfolgen kann.

Neben Messdaten oder simulierten virtuellen Daten können dem Modell in einer weiteren vorteilhaften Ausführungsvariante auch exogene Informationen zugeführt werden, welche optional bei der Auswertung des Modells verwendet werden können. Auf diese Weise kann die Vorhersage der Zeitreihendaten noch genauer werden, wenn beispielsweise Wetterdaten bei der Berechnung von Wasserdurchflüssen in einem Wasserversorgungsnetzwerk berücksichtigt werden. Randbedingungen bei der Berechnung der Vorhersage können auf diese Weise besser berücksichtigt werden.

In einer weiteren vorteilhaften Ausführung der Erfindung kann die Vorhersage der Zeitreihendaten im laufenden Betrieb der verfahrenstechnischen Anlage in Echtzeit erfolgen. Das erfindungsgemäße Verfahren kann somit direkt zur Optimierung und Anpassung von Betriebsparametern eingesetzt werden. Echtzeitvorhersagen führen zur frühzeitigen Erkennung von Anomalien im Prozess, der Zustand der Anlage kann kontinuierlich überwacht werden und Entscheidungen können auf diese Weise fundierter getroffen werden. Diese Vorteile tragen insgesamt zu einer effizienteren, sichereren und kostengünstigeren Betriebsführung verfahrenstechnischer Anlagen bei.

In einer weiteren vorteilhaften Ausführung der Erfindung erfolgt auch das Trainieren des Modells im laufenden Betrieb der verfahrenstechnischen Anlage. Auf diese Weise kann das Modell instantan verbessert werden, weil eine direkte Rückkopplung der Anlage auf das Modell erfolgt. Die Vorhersage verbessert sich in diesem Falle sozusagen autonom. Ein Anwender spart auf diese Weise viel Aufwand bei der Modelloptimierung.

Die beschriebenen Weiterbildungen beziehen sich sowohl auf das erfindungsgemäße Verfahren als auch auf die Vorrichtung.

Ferner ist eine Realisierung der Erfindung oder einer beschriebenen Weiterbildung möglich durch ein Computerprogramm, insbesondere einer Software-Applikation, mit durch einen Computer ausführbaren Programmcodeanweisungen zur Implementierung des Verfahrens, wenn das Computerprogramm auf einem Computer ausgeführt wird.

Auch können die Erfindung und/oder jede beschriebene Weiterbildung durch ein Computerprogrammprodukt realisiert sein, welches ein Speichermedium aufweist, auf welchem ein Computerprogramm gespeichert ist, welches die Erfindung und/oder die Weiterbildung ausführt.

Das Computerprogrammprodukt ist vorteilhaft in einen Arbeitsspeicher einer Recheneinheit überführbar und von dort aus mit Hilfe zumindest einer CPU ausführbar. Das Computerprogrammprodukt ist vorteilhaft auf einem Datenspeicher wie einem USB-Stick oder einem Halbleiterspeicher, einer Festplatte oder einem Cloud-Speicher speicherbar und von dort aus auf einer Recheneinheit abrufbar oder installierbar.

Im Folgenden wird die Erfindung anhand eines in den Figuren dargestellten Ausführungsbeispiels näher beschrieben und erläutert.

Darin zeigen, jeweils in vereinfachter schematischer Darstellung:

FIG 1 ein Ausführungsbeispiel einer Vorrichtung zur Durchführung des erfindungsgemäßen Verfahrens, und

FIG 2 Graphen mit vorhergesagten Zeitreihendaten zur Verdeutlichung der Auswirkungen des erfindungsgemäßen Verfahrens

Die Erfindung und die beschriebenen Weiterbildungen werden bevorzugt in Software als auch in Hardware, beispielsweise unter Verwendung einer speziellen elektrischen Schaltung realisiert oder in einer Kombination aus Soft- und Hardware implementiert wie beispielsweise einem Computer oder einer Vorrichtung zur Datenverarbeitung.

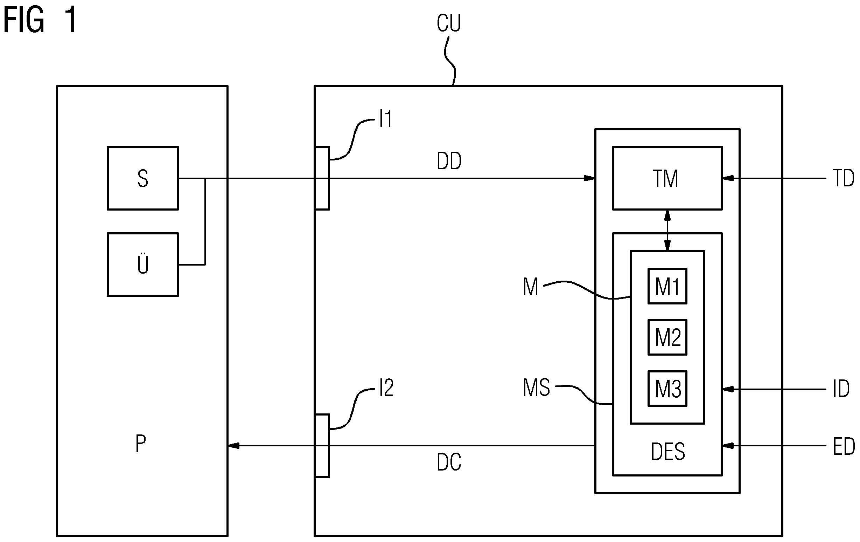

In Fig. 1 ist ein Ausführungsbeispiel einer Vorrichtung CU zur Vorhersage von Zeitreihendaten mindestens eines Sensors einer verfahrenstechnischen Anlage dargestellt. Bei der Vorrichtung CU kann es sich um einen Computer oder eine beliebige Recheneinheit mit einem Zentralprozessor (CPU), eine FPGA oder eine Tensor Processing Unit (TPU) handeln. Die Vorrichtung CU weist in dieser Ausführung mindestens eine Schnittstelle I1 zum Empfang von diskreten Datensätzen DD oder daraus abgeleiteter Größen von einem oder mehreren Sensoren S und/oder einem Überwachungsgerät Ü auf. Der Sensor S und/oder das Überwachungsgerät Ü sind in einer verfahrenstechnischen Anlage angeordnet, in welcher ein kontinuierlicher, verfahrenstechnischer Prozess P abläuft, und dazu ausgebildet, Prozessvariablen aus dem Prozess aufzunehmen, weiterzuverarbeiten und an übergeordnete Einheiten (wie eine Leittechnik, ein Automatisierungssystem oder eine beliebige Recheneinheit) abzugeben. Bei den aufgenommenen Prozessvariablen kann es sich um Messwerte physikalischer Größen wie Druck, Temperatur oder Durchfluss handeln oder auch - im Falle des Überwachungsgerätes - um Daten wie Vibrationen, Geräuschpegel oder Kräfte. Beispiele für einen kontinuierlichen verfahrenstechnischen Prozess P sind kontinuierliche Destillationen, Extraktion chemischer Stoffe, Wasseraufbereitung, Wasserverteilung oder Prozesse zur Energiegewinnung. Grundsätzlich ist die Erfindung jedoch auch auf andere kontinuierliche technische Prozesse oder Vorgänge anwendbar wie die Bewegung eines Roboterarms oder der Antrieb einer Turbine. Für die Erfindung spielt es keine Rolle, ob der Prozess P in der realen Welt stattfindet, oder virtuell, in einem digitalen Zwilling, und somit in der digitalen Welt abgebildet ist.

Wie bereits erläutert handelt es sich bei den diskreten Datensätzen DD in diesem Kontext um digitale Signale, die entweder mit einer bestimmten Abtastrate in regelmäßigen Abständen oder zu einzelnen Zeitpunkten aufgenommen werden und damit diskreter Natur sind. Die digitalen Signale können sowohl aus einem realen Prozess, einem digitalen Zwilling eines realen Prozesses oder aus beiden Prozessarten stammen. Der Begriff der Zeitreihendaten wird in diesem Kontext derart verwendet, dass Daten diskret (mit bestimmten Zeitstempeln), aber in endlichen zeitlichen Abständen aufgenommen werden. Zur Überwachung des Betriebs einer verfahrenstechnischen Anlage wird eine Vielzahl von Datensätzen von Prozessvariablen, die den Betrieb der Anlage kennzeichnen, in Abhängigkeit von der Zeit t erfasst und in einem Datenspeicher (häufig ein Archiv) abgespeichert.

Zur Vorhersage der Zeitreihendaten eines Sensors einer Prozessvariablen muss der zeitkontinuierliche Prozess P zunächst in einem Modell M abgebildet werden. Das Modell M berechnet die Dynamik des Prozesses und charakterisiert mit all seinen Parametern den kontinuierlichen Prozess. Ein wesentlicher Bestandteil des Modells M ist ein datenbasiertes Modell M1 wie es zum maschinellen Lernen verwendet wird. Es kann sich dabei beispielsweise um ein neuronales Netz handeln. Optional kann das datenbasierte Modell M1 mit einem physikalischen Modell M2 und/oder einem stochastischen Modell M3 kombiniert werden. Das datenbasierte Modell ist dabei obligatorisch. Das Modell M kann dabei bereits vortrainiert sein oder es wird mit einem Trainingsmodul TM verbunden, in welchem das Modell mit entsprechenden Trainingsdaten TD eingelernt wird. Bei einem neuen Training wird eine Zielfunktion definiert, Trainings-, Validierungs- und Testdaten werden definiert und ein Initialzustand wird berechnet. Anschließend wird ein Berechnungszeitraum festgelegt und das Modell wird mehrfach unter geänderten Modellgewichten berechnet. Falls ein physikalisches Modell M2 umfasst ist, muss ein Experte (Nutzer oder Entwickler) im Vorfeld explizit die Physik / Dynamik der Gleichungen festgelegt haben.

Sobald die Modellvorverarbeitung abgeschlossen ist (hier Training eines Modells, physikalische Modellierung, ggfs. Anpassung bestimmter Parameter und Optimierung) und alle Modellanteile festgelegt sind, wird ein Initialzustand des Modells berechnet. Die Berechnung erfolgt entweder auf Basis der diskreten Eingangsdaten DD oder ist im Vorfeld auf einen statischen Wert festgelegt. Beispielsweise kann der Initialzustand in allen Dimensionen auf null gesetzt werden.

Neben der Modelldefinition und -initialisierung können optional zusätzliche / exogene Informationen, welche im Modell berücksichtigt werden sollen, festgelegt werden. Hierunter werden exogene, also außerhalb des Prozesses liegende Faktoren erfasst wie beispielsweise das Wetter, Luftverhältnisse oder Schadstoffe kennzeichnende Größen in Abhängigkeit von der Zeit t. Beispielsweise können bei der Berechnung einer Vorhersage von Wasserverbrauchsdaten Feiertage, Wetterdaten oder Verbrauchsprofile der Bewohner einer Stadt als exogene Daten berücksichtigt werden.

In einem nächsten Schritt wird mindestens eine Vorhersagezeitraum mit zugehörigen, diskreten Zeitschritten festgelegt und anschließend wird das zuvor erstellte, vorverarbeitete und trainierte Modell für die festgelegten Vorhersagezeiträume ausgewertet. Dazu wird das Modell M nach der Zeit abgeleitet und mittels eines Differentialgleichungslösers DES berechnet.

Ein Repräsentant des erfindungsgemäßen Systems MS aus Modell und Differentialgleichungslöser sind so genannte neuronale stochastische Differentialgleichungen (SDE). Neuronale Stochastische Differentialgleichungen (SDE) kombinieren ein datenbasiertes, zeitkontinuierliches, neuronales Netz, optional ein physikalisches Modell und/oder stochastisches Modell, und einen Differentialgleichungslöser DES. Damit sind SDE zeitkontinuierliche Modelle. Sie können als Approximatoren angesehen werden. Mathematisch kann das SDE wie folgt beschrieben werden:

$$\dot{x}(t) = \frac{dx(t)}{dt} = f_{NN}\big(x(t), u(t)\big) + f_{Phys}\big(x(t), u(t)\big) + g_{NN}\big(x(t), u(t)\big) \cdot \mathcal{N}(0, 1)$$

Dabei ist

$x(t)$ der interne Zustand des Prozesses zum Zeitpunkt t,
$u(t)$ der exogene Eingang zum Zeitpunkt t,
$\dot{x}(t)$ die Ableitung des Zustandes $\dot{x}(t)$ nach der Zeit,
$f_{NN}(\cdot)$ ein Neuronales Netz, das den deterministischen, datenbasierten Anteil der Ableitung berechnet,
$f_{Phys}(\cdot)$ ein physikalisches Modell, das den physik-basierten Anteil der Abteilung berechnet,
$g_{NN}(\cdot)$ ein Neuronales Netz, das den stochastischen, datenbasierten Anteil der Ableitung berechnet,

$\mathcal{N}(0, 1)$ eine Normalverteilung mit einem Mittelwert von 0 und einer Varianz von 1.

Der Zustand x(t) kann dabei als physikalischer Zustand gewählt werden, was insbesondere in Kombination mit dem optionalen physikalischen Modell $f_{Phys}(\cdot)$ vorteilhaft ist. Es ist jedoch auch möglich, den Zustand x(t) als sogenannten Hidden State frei zu wählen, und optional auch zu erweitern, um die Freiheitsgrade für den Informationsfluss zu erhöhen (Hidden State Augmentation).

Um die kontinuierliche Ableitung des Zustandes ($\dot{x}(t)$) auf disktrete Messwerte anwenden zu können, ist ein Differentialgleichungslöser notwendig. Der Differentialgleichungslöser berechnet die Lösungen der Ableitungen für vorgegebene Zeitintervalle. Hier bietet sich zum Beispiel die Euler-Diskretisierung oder das Runge-Kutta Verfahren als Verfahren mit fester Schrittweite an. Alternativ können viele Algorithmen mit variabler Schrittweite verwendet werden, wie zum Beispiel die Dormand-Price Methode. Die Berechnung der Ableitung lässt auch Zwischenschritte zu, das bedeutet, dass die internen Auswertungszeitpunkte des DGL-Lösers nicht den festgelegten Vorhersagezeiträumen entsprechen müssen.

Bei der Berechnung findet eine explizite und linear kombinierte Aufgabenteilung statt. Das Neuronale Netz $g_{NN}$ (x(t), u(t)) wird explizit und ausschließlich darauf trainiert, das Prozess- und Messrauschen abzubilden. Das neuronale Netz $f_{NN}$(x(t), u(t)) übernimmt die Aufgabe, den deterministischen Teil der Lösung zu modellieren. Optional kann Expertenwissen über die Funktion $f_{Phys}$(x(t), u(t)) direkt und auf Differentialgleichungsebene integriert werden.

Die Transformation vom zeitkontinuierlichen Raum hin zum zeitdiskreten Raum wird vom Differentialgleichungslöser gelöst, und ist damit unabhängig von der Modellierung einschließlich den trainierten Modellparametern. Dies ist ein Alleinstellungsmerkmal im Vergleich zu allen zeitdiskreten Modellen. Eine anschauliche Erklärung für die Vorteile von zeitkontinuierlichen Modellen besteht darin, dass durch die ausschließliche Modellierung von Veränderungsraten ein Bias gesetzt wird. Dem Modell wird das Vorwissen implementiert, dass sich im Regelfall wenig verändert, oder dass Dynamiken tendenziell begrenzt sind. Beispielsweise und sehr vereinfacht ist bei dynamischen Prozessen die Annahme sinnvoll, dass das Wetter in ein paar Minuten eher dem Wetter zum aktuellen Zeitpunkt ähnelt als vollständig zufällig zu sein. Diese Annahme kann mangelnde Informationen in Trainingsdaten ergänzen.

Für die festgelegten Vorhersagezeiträume werden nach der Berechnung diskrete Erwartungswerte von Zeitreihendaten DC ausgegeben. Sie können beispielsweise als Befehle zur Steuerung oder zur Optimierung von Prozessparametern dem kontinuierlichen Prozess P über eine Schnittstelle I2 entweder in Echtzeit oder zeitversetzt zugeführt werden. Alternativ können die berechneten Erwartungswerte der Zeitreihendaten auch für die Planung (engl. engineering) einer verfahrenstechnischen Anlage verwendet werden. Die Vorrichtung kann ferner mit diskreten Eingangsdaten eines digitalen Zwillings eines kontinuierlichen Prozesses P betrieben werden. Außerdem können der Vorrichtung exogene Daten ED oder Testdaten (Inferenzdaten ID) zugeführt werden. Die berechneten, diskreten Erwartungswerte von Zeitreihendaten können zur Prozessoptimierung dem digitalen Zwilling oder auch dem realen Prozess oder beiden Prozessen zugeführt werden.

Die Vorrichtung CU kann ferner mit einer eine Anzeigeeinheit (nicht dargestellt) aufweisen oder mit einer solchen verbunden sein, um die vorhergesagten Zeitreihendaten auf einer graphischen Benutzeroberfläche anzuzeigen. Über die graphische Benutzeroberfläche kann ein Anwender beliebig mit der Vorrichtung CU interagieren.

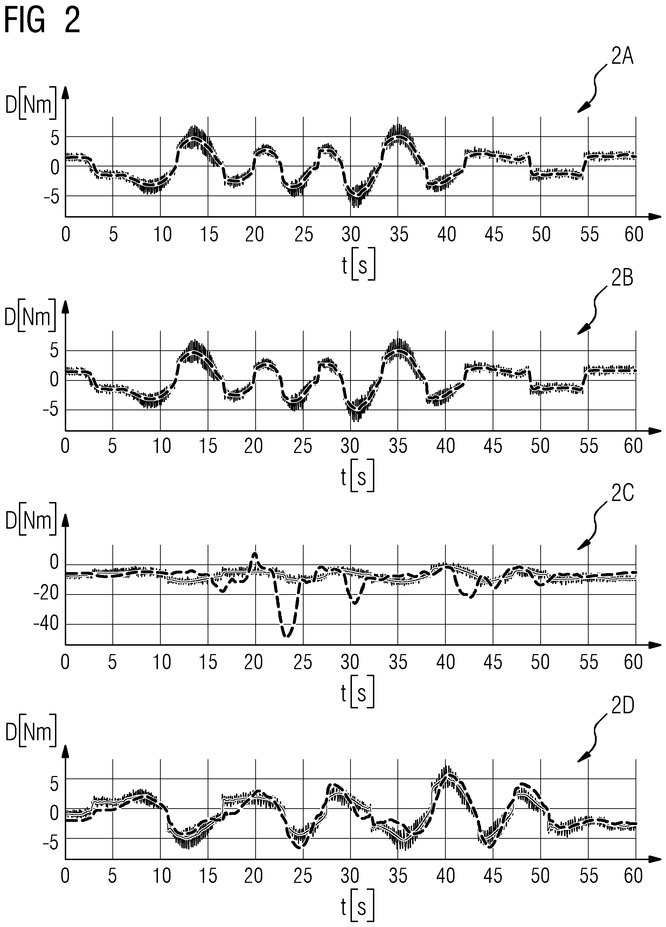

In Fig. 2 sind die Graphen 2A bis 2D von Zeitreihendaten von gemessenen und vorhergesagten Drehmomenten eines Motors unter Verwendung unterschiedlicher Modelle gezeigt. Gezeigt ist jeweils der Verlauf des Drehmoments D in N/m einer einzelnen Achse für eine Bewegung über 60 Sekunden. Das mittels eines Sensors aufgenommene, digitale Signal des Drehmoments mit seinen hochfrequenten Anteilen ist in allen Graphen (2A bis 2D) in grau dargestellt. Die zeitlichen Verläufe desselben Signals, welches durch einen Tiefpass geglättet ist, ist in schwarz dargestellt. Die schwarz gestrichelten Verläufe entsprechen mittels eines Modells vorhergesagten Zeitreihendaten.

Die Verläufe des Graphen 2A zeigen die gemessenen und mittels eines zeitdiskreten Modells vorhergesagten Zeitreihendaten des Drehmoments. Die Verläufe des Graphen 2B zeigen die gemessenen und mittels eines zeitkontinuierlichen Modells vorhergesagten Zeitreihendaten des Drehmoments. In beiden Fällen wurden für das Modell bekannte, regulär aufgezeichnete, Trainingsdaten für das Einlernen verwendet. Beide Graphen zeigen eine gewisse Ähnlichkeit. Die vorhergesagten Zeitreihendaten unterscheiden sich unwesentlich, obwohl unterschiedliche Modelle verwendet wurden.

Die Verläufe des Graphen 2C zeigen die gemessenen und mittels eines zeitdiskreten Modells vorhergesagten Zeitreihendaten des Drehmoments. Die Verläufe des Graphen 2D zeigen die gemessenen und mittels eines zeitkontinuierlichen Modells vorhergesagten Zeitreihendaten des Drehmoments. In beiden Graphen 2C und 2D werden unbekannte, regulär aufgezeichnete Testdaten verwendet. Die identischen Trainingsdaten sind in den Graphen 2A und 2B gezeigt. Der Verlauf des mittels des zeitdiskreten Modells vorhergesagten Drehmoments des Graphen 2C (gestrichelte schwarze Linie) zeigt deutliche Ausreißer. Zwischen den Messwerten und den vorhergesagten Werten der Zeitreihendaten zeigen sich deutliche Unterschiede. Im Falle des zeitkontinuierlichen Modells (Graph 2D) hingegen stimmen die Messwerte des Drehmoments und die mittels des erfindungsgemäßen Verfahrens vorhergesagten Zeitreihendaten des Drehmoments (schwarz gestrichelte Linie) annähernd überein. Das zeitkontinuierliche Modell kann im Zusammenspiel mit den diskreten Eingangsdaten eine wesentlich bessere Vorhersage treffen. Durch die kontinuierliche Approximation des Differentialgleichungslösers kann das Modell viel zuverlässiger auf die unbekannten Testdaten reagieren. Auf diese Weise kann eine deutliche Verbesserung beispielsweise bei der Zustandsüberwachung der betrachteten Drehachse erreicht werden.

Hinweis: Alle personenbezogenen Formulierungen in diesem Dokument sind geschlechts-neutral zu verstehen.

**Patentansprüche**

1. Computerimplementiertes Verfahren zur Vorhersage von Zeitreihendaten mindestens eines Sensors (S) einer verfahrenstechnischen Anlage, mit den Schritten:

   - Empfangen von diskreten Eingangsdaten (DD) des mindestens einen Sensors (S) und/oder eines Überwachungsgeräts (Ü) über eine Zeitspanne,
   - Empfangen eines vorverarbeiteten, dynamischen Modells (M), welches zumindest teilweise datenbasiert ist und einen kontinuierlichen Prozess (P) charakterisiert,
   - Berechnung eines Initialzustands des Modells (M),
   - Festlegen mindestens eines Vorhersagezeitraums mit zugehörigen, diskreten Zeitschritten,
   - Auswertung des kontinuierlichen Modells (M) für die festgelegten Vorhersagezeiträume mittels eines Differentialgleichungslösers (DES),
   - Ausgabe von diskreten Erwartungswerten von Zeitreihendaten für die festgelegten Vorhersagezeiträume,
   - Verbesserung eines Betriebs und/oder einer Planung der verfahrenstechnischen Anlage mittels der vorhergesagten Zeitreihendaten.

2. Verfahren nach Anspruch 1,
   wobei das dynamische Modell (M) neben dem datenbasierten Modell (M1) ein physikalisches Modell (M2) und/oder stochastisches Modell (M3) aufweist.

3. Verfahren nach Anspruch 1 oder 2,
   wobei die diskreten Eingangsdaten pro Sensor (S) Messwerten von Prozessvariablen oder mittels eines digitalen Zwillings simulierten Werten von Prozessvariablen entsprechen.

4. Verfahren nach einem der vorhergehenden Ansprüche,
   wobei ferner exogene Informationen (ED) dem Modell (M) zugeführt werden, welche optional bei der Auswertung des Modells verwendet werden.

5. Verfahren nach einem der vorhergehenden Ansprüche,
   wobei die Vorhersage der Zeitreihendaten im laufenden Betrieb der verfahrenstechnischen Anlage in Echtzeit erfolgt.

6. Verfahren nach einem der vorhergehenden Ansprüche,
   wobei das Trainieren des Modells (M) im laufenden Betrieb der verfahrenstechnischen Anlage erfolgt.

7. Vorrichtung (CU) zur Vorhersage von Zeitreihendaten mindestens eines Sensors (S) einer verfahrenstechnischen Anlage, in welcher ein kontinuierlicher Prozess (P) abläuft, wobei die Anlage mindestens einen Sensor(S) und/oder mindestens ein Überwachungsgerät (Ü) zur Erfassung von diskreten Datensätzen von Prozessvariablen aufweist,

    - mit mindestens einer Schnittstelle (I1) zum Empfang der diskreten Eingangsdaten (DD) des mindestens einen Sensors (S) und/oder des Überwachungsgeräts (Ü),
    - mit einer weiteren Schnittstelle (I2) zur Ausgabe der vorhergesagten Zeitreihendaten (DC), und
    - mit einer Datenverarbeitungseinrichtung, die dazu ausgebildet ist, das Verfahren nach einem der Ansprüche 1 bis 6 durchzuführen.

8. Computerprogramm, insbesondere Software-Applikation, mit durch einen Computer ausführbaren Programmcodeanweisungen zur Implementierung des Verfahrens nach einem der Ansprüche 1 bis 6, wenn das Computerprogramm auf einem Computer ausgeführt wird.

9. Computerprogrammprodukt, insbesondere Datenträger oder Speichermedium, mit einem durch einen Computer ausführbaren Computerprogramm gemäß Anspruch 8.

FIG 1

# FIG 2

Europäisches
Patentamt

European
Patent Office

Office européen
des brevets

**EUROPÄISCHER RECHERCHENBERICHT**

Nummer der Anmeldung

EP 24 19 7958

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/357166 A1 (REHOR JIRI [CZ]) 8. Dezember 2016 (2016-12-08) * das ganze Dokument * ----- | 1-3,5-9 | INV. G05B17/02 |
| X | US 2022/143569 A1 (HOLZMEISTER PHIL JACK [DE] ET AL) 12. Mai 2022 (2022-05-12) * das ganze Dokument * ----- | 1,4,7-9 | |
| X | US 2013/080132 A1 (RUBIE PETER JOHN [AU]) 28. März 2013 (2013-03-28) * das ganze Dokument * ----- | 1,7-9 | |
| X | CN 113 361 139 B (GUANGDONG INTELLIGENT ROBOTICS INST) 31. Januar 2023 (2023-01-31) * das ganze Dokument * ----- | 1,7-9 | |
| | | | RECHERCHIERTE SACHGEBIETE (IPC) G05B B02C G06F |

Der vorliegende Recherchenbericht wurde für alle Patentansprüche erstellt

| Recherchenort | Abschlußdatum der Recherche | Prüfer |
|---|---|---|
| Den Haag | 10. Februar 2025 | José Luis Meseguer |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)

# EP 4 703 814 A1

## ANHANG ZUM EUROPÄISCHEN RECHERCHENBERICHT
## ÜBER DIE EUROPÄISCHE PATENTANMELDUNG NR.

EP 24 19 7958

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2025

| Im Recherchenbericht angeführtes Patentdokument | Datum der Veröffentlichung | Mitglied(er) der Patentfamilie | | Datum der Veröffentlichung |
|---|---|---|---|---|
| US 2016357166 A1 | 08-12-2016 | EP | 3101488 A1 | 07-12-2016 |
| | | US | 2016357166 A1 | 08-12-2016 |
| US 2022143569 A1 | 12-05-2022 | CN | 113678071 A | 19-11-2021 |
| | | EP | 3696619 A1 | 19-08-2020 |
| | | EP | 3924785 A1 | 22-12-2021 |
| | | JP | 2022520643 A | 31-03-2022 |
| | | KR | 20210128449 A | 26-10-2021 |
| | | TW | 202105098 A | 01-02-2021 |
| | | US | 2022143569 A1 | 12-05-2022 |
| | | WO | 2020165045 A1 | 20-08-2020 |
| US 2013080132 A1 | 28-03-2013 | AU | 2012216845 A1 | 04-04-2013 |
| | | CA | 2790615 A1 | 20-03-2013 |
| | | US | 2013080132 A1 | 28-03-2013 |
| CN 113361139 B | 31-01-2023 | KEINE | | |

EPO FORM P0461